# EUROPEAN PATENT APPLICATION

(11) **EP 1 657 831 A1**
(43) Date of publication of application: **17.05.2006**
(21) Application number: 04771886.1
(22) Date of filing: 19.08.2004
(51) Int. Cl.: H04B 7/10, H01Q 3/24, H01Q 3/44

(54) **ANTENNA AND RECEIVER APPARATUS USING THE SAME**

(30) Priority: 21.08.2003 JP 2003297623
(71) Applicant: SONY CORPORATION, Tokyo 141-0001 (JP)
(72) Inventor: WASHIRO, Takanori, Shinagawa-ku, Tokyo 1410001 (JP)
(74) Representative: DeVile, Jonathan Mark
(86) International application number: PCT/JP2004/011925
(87) International publication number: WO 2005/020468

(57) **Abstract**

It aims at achieving effective diversity reception in even a small sized wireless signal-receiving apparatus, improvement in sensitivity of antenna, and implementation of the small size, the lower power consumption, and the low price of the antenna. The antenna 100 has antenna elements 10 and 11 that are positioned at smaller distance apart than a half wavelength of a frequency of signal to be received, a transmission line L1 and a transmission line L2 having a delay circuit 14 with a predetermined electric length, and a changeover switch 13. A difference of an electric length of a path that passes from the antenna element 10 through the transmission line L1 or L2 toward a synthesizer 15 from an electric length of a path that passes from the antenna element 11 through the transmission line L2 or L1 toward the synthesizer 15 is set so as to become (λ/2-α) or (-λ/2+α). When receiving a signal, the changeover switch 13 changes based on a control signal, so that directivity of the antenna 100 can vary.

## Description

### Technical Field

The present invention relates to an antenna that switches its directivity by using small antenna elements and a signal-receiving apparatus using the same. More specifically, it relates to a receiving antenna and the like, the antenna comprising a plurality of antenna elements positioned at smaller distance apart than a half wavelength of a frequency of signal to be received, a plurality of transmission lines for transmitting the signal received in any of the antenna elements, at least any one of the transmission lines having a delay circuit with a predetermined electric length, synthesizing means for synthesizing the received signals that have been transmitted through the plurality of transmission lines, and switching means, which is positioned in the transmission line, for switching the antenna elements or the transmission lines, in which the switching means switches the antenna elements or the transmission lines to set to two a number of antenna elements to be simultaneously output among the plurality of antenna elements and to change a directivity of the antenna to the reverse direction thereof, thereby allowing diversity reception to be effectively done in even a small sized wireless signal-receiving apparatus so that a sensitivity of the antenna can be improved and it is possible to implement the small size, the lower power consumption, and the low price thereof.

### Background Art

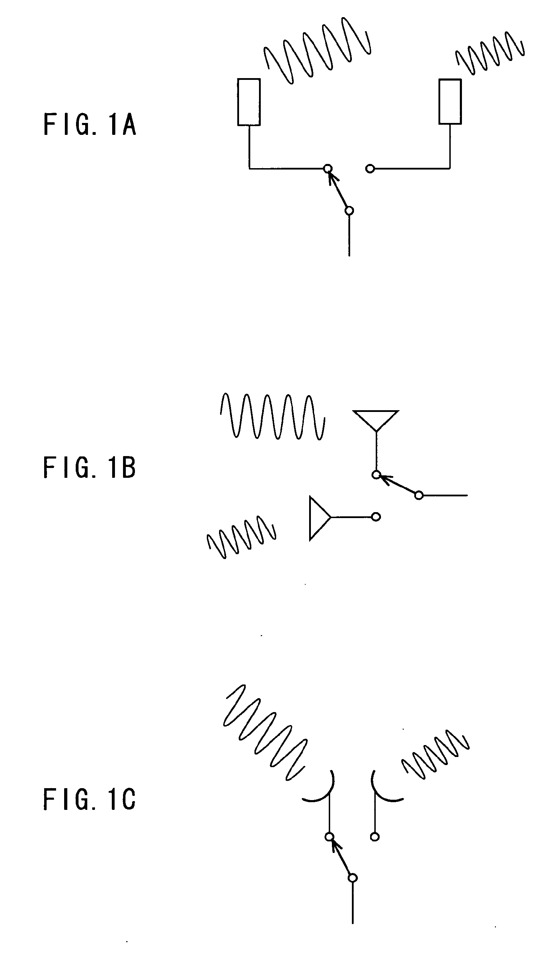

A diversity reception has been conventionally known as means for reducing an effect of phasing in a wireless communication. Generally, in a diversity receiving apparatus, a space diversity scheme for switching a plurality of antennas spatially positioned apart one from another, a polarization diversity scheme for switching and using antennas having their different polarization surfaces, a directivity diversity scheme for switching and using antennas having their dif ferent directivities or the like is employed. Figs. 1A to 1C are diagrams each for illustrating reception situations by the conventional diversity schemes: Fig. 1A illustrates the reception situation by the space diversity scheme; Fig. 1B illustrates the reception situation by the polarization diversity scheme; and Fig. 1C illustrates the reception situation by the directivity diversity scheme.

As illustrated in Figs. 1A to 1C, according to the diversity reception, a plurality of antennas is previously prepared, and when receiving a signal, a better or best antenna (for example, one having stronger or strongest electric field intensity) is selected between or among the antennas as a receiving antenna.

Recent popularization of mobile communication terminals has developed small sizes of wireless communication apparatus and antenna element. As a result thereof, if a size of the wireless communication apparatus is smaller than wavelength of electric wave, it is impossible to leave a sufficient space in the antennas mounted on the apparatus orbuilt inside thereof, thereby failing to implement the space diversity reception effectively. Alternatively, because a small antenna generally has non-directivity and large interference between the polarized waves, it is difficult to employ any diversity scheme using differences in the directivity and the polarization.

Further, it has proposed how to improve wireless communication quality by controllingphases and amplitudes in the plurality of antennas to vary their directivities (for example, Japanese Patent Application Publication No. 2002-280942).

In this case, such a variable directive antenna has a single main antenna for receiving power from a transmission/reception circuit and radiating electric wave directly and a plurality of auxiliary antennas for reflecting electric wave radiated from the main antenna and radiating secondary electric wave with it being phase-shifted by a predetermined amount of shift, so that directivity of the variable directive antenna can vary by controlling the amount of shift in the plurality of auxiliary antennas. In order to phase-shift the reflected wave from the plurality of auxiliary antennas, variably phase-shifting circuits that are respectively connected to the auxiliary antennas are provided therein.

Further, directivity switchable antenna for mobile communication that can get sufficient gain from electric wave received in a horizontal direction or a direction of 45 degrees with respect thereto has also been proposed (for example, Japanese Utility Model Application Publication No. H06-41213).

In this case, a pair of antenna elements that are positioned apart one from another by a predetermined distance of wavelength of central frequency to be used, and a phase-controlling circuit for allowing signals having a phase similar to each other or different phases from each other by a phase difference corresponding to a predetermined distance to be supplied to electric conductors of the respective paired antenna elements are provided. A length of the electric conductor of any one of the antenna elements varies so that its directivity can be changed into a horizontal direction or a direction of 45 degrees with respect thereto.

As described above, if a size of the wireless communication apparatus is smaller than wavelength of electric wave, it is impossible to leave a sufficient space in the antennas mounted on the apparatus orbuilt inside thereof, thereby failing to implement the space diversity reception effectively.

Further, in a case of the invention disclosed in Japanese Patent Application Publication No. 2002-280942, the variably phase-shifting circuits and a control circuit are required, which is not suited to any small sized wireless communication apparatus.

Additionally, in a case of the invention disclosed in Japanese Utility Model Application Publication No. H06-41213, although it is possible to switch directivity to a horizontal direction or a direction of 45 degrees with respect thereto by using a changeover switch to supply signals having a phase similar to each other or different phases from each other by a phase difference corresponding to a predetermined distance, it is impossible to change directivity of an array antenna having two antenna elements into its reverse direction.

### Disclosure of the Invention

An antenna relative to the invention is an antenna for receiving wireless communication signal, the antenna comprising a plurality of antenna elements positioned at smaller distance apart than a half wavelength of a frequency of signal to be received, a plurality of transmission lines for transmitting the signal received in any of the antenna elements, at least any one of the transmission lines having a delay circuit with a predetermined electric length, synthesizing means for synthesizing the received signals that have been transmitted through the plurality of transmission lines, and switchingmeans, which is positioned in the transmission line, for switching the antenna elements or the transmission lines, inwhich the switchingmeans switches the antenna elements or the transmission lines to set to two a number of antenna elements to be simultaneously output among the plurality of antenna elements and to change a directivity of the antenna to the reverse direction thereof.

For example, the delay circuit is set so that a sum of phase difference corresponding to a distance between the two antenna elements outputting simultaneously and phase difference of electric length of the transmission lines connected to the two antenna elements can become 180 degrees.

Further, for example, a distance between the antenna elements and the delay circuit are adjusted, so that the antenna can have null point in the directivity thereof in at least one direction.

A signal-receiving apparatus relative to the invention is a signal-receiving apparatus for receiving wireless communication signal, the apparatus comprising an antenna for receiving the wireless communication signal, a signal-receiving circuit for processing a signal received from the antenna, and control means for controlling directivity of the antenna, the antenna including a plurality of antenna elements positioned at smaller distance apart than a half wavelength of a frequency of signal to be received, a plurality of transmission lines for transmitting the signal received in any of the antenna elements, at least any one of the transmission lines having a delay circuit with a predetermined electric length, synthesizing means for synthesizing the received signals that have been transmitted through the plurality of transmission lines, and switching means, which is positioned in the transmission line, for switching the antenna elements or the transmission lines, in which the switching means switches the antenna elements or the transmission lines to set to two a number of antenna elements to be simultaneously output among the plurality of antenna elements and to change a directivity of the antenna to the reverse direction thereof.

According to the invention, the antenna having a plurality of antenna elements with non-directivity, which are positioned at smaller distance apart than a half wavelength of a frequency of signal to be received, is switched by connecting two antenna elements selected among the plurality of antenna elements to two transmission lines, respectively, each having a predetermined electric length by switching means when receiving the signal, and thus, thereby changing directivity of the antenna to the reverse direction thereof.

This allows diversity reception to be effectively done in even a small sized wireless signal-receiving apparatus. It is also possible to get a high antenna gain and to choose a desired signal from noise based on a difference in their receiving direction to receive the desired signal selectively.

### Brief Description of the Drawings

Fig. 1A is a diagram for illustrating reception situations of the conventional diversity scheme;
Fig. 1B is a diagram for illustrating reception situations of the conventional diversity scheme;
Fig. 1C is a diagram for illustrating reception situations of the conventional diversity scheme;
Fig. 2 is a diagram for illustrating a configuration of a first embodiment of an antenna;
Fig. 3A is a diagram for illustrating operation situations of the antenna;
Fig. 3B is a diagram for illustrating operation situations of the antenna;
Fig. 3C is a diagram for illustrating operation situations of the antenna;
Fig. 3D is a diagram for illustrating operation situations of the antenna;
Fig. 4 is a diagram for illustrating a configuration of a second embodiment of an antenna;
Fig. 5 is a diagram for illustrating a configuration of a third embodiment of an antenna; and
Fig. 6 is a diagram for illustrating a configuration of an embodiment of signal-receiving apparatus.

### Best Mode for Carrying out the Invention

The following will describe embodiments of an antenna and signal-receiving apparatus using the same relative to the present invention with reference to drawings.

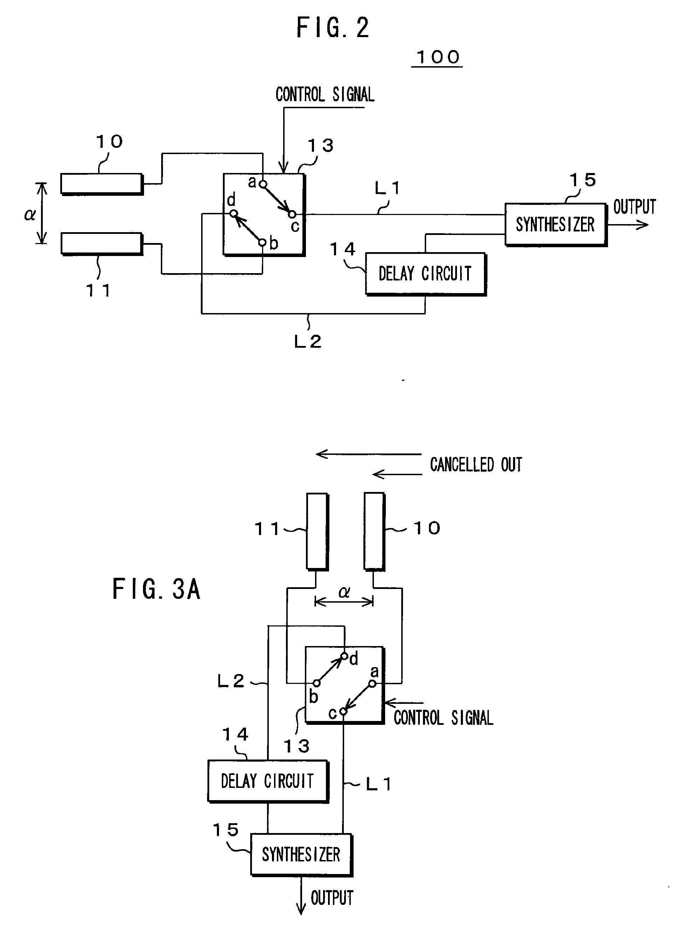

Fig. 2 is a diagram for illustrating a configuration of a first embodiment of an antenna 100 relative to this invention. As shown in Fig. 2, the antenna 100 is composed of antenna elements 10 and 11, a changeover switch 13 as switching means, a delay circuit 14, a synthesizer 15 as synthesizing means, and transmission lines L1 and L2.

The antenna elements 10 and 11 are both non-directivity antenna elements. These antenna elements 10 and 11 are arranged so that they are positioned at smaller distance, for example, 12.5 mm (one tenth wavelength) apart than a half wavelength of a frequency, 2.4 GHz, of a signal to be received.

The changeover switch 13 is a switch of dual pole double throw (DPDT) type, which has two input terminals and two output terminals, and wherein it is changed over by movable terminals with them being moved simultaneously. Such the change-over operations of changeover switch 13 is controlled based on the received control signal. Property of the changeover switch 13 is as follows: for example, an operating frequency region; DC to 6 GHz or less, control voltages; 0/+3 V, and insertion loss; 1.2 dB typical (at frequencies of 2.40 to 2.50 GHz).

The delay circuit 14 is used for the transmission lines L1 and L2 to generate a predetermined phase difference therebetween. For example, it is made of conductor having a predetermined electric length. For example, it is composed of a conductor having a predetermined electric length. This delay circuit 14 is provided in the transmission line L2. It is estimated herein that a distance between the antenna elements 10 and 11 is α and a difference between electric lengths of the transmission lines L1 and L2, which are respectively connected to the antenna elements 10 and 11, is β. The delay circuit 14 is set so that α+β can become a half wavelength (λ/2; 180 degrees in phase) of a frequency of a signal to be received. Namely, a difference of an electric length of a path that passes from the antenna element 10 through the transmission line L1 or L2 toward the synthesizer 15 from an electric length of a path that passes from the antenna element 11 through the transmission line L2 or L1 toward the synthesizer 15 is set so as to become (λ/2-α) or (-λ/2+α).

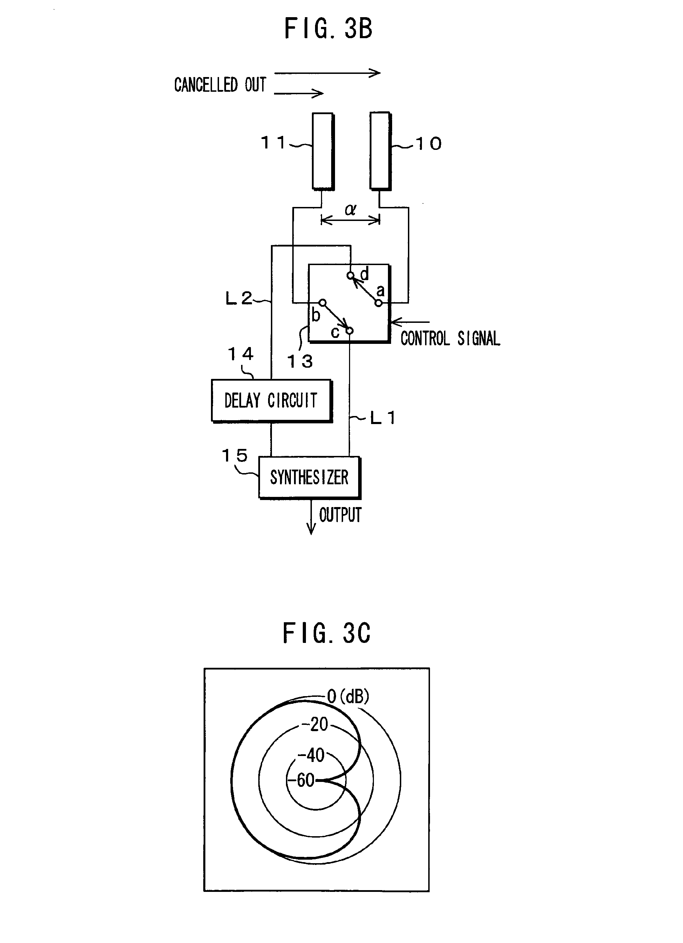

In this case, waves existing along an extension of line connecting the antenna elements 10 and 11 are cancelled out for each other at a side of antenna element 10 to generate a null point (i.e., a sink-in point in a directivity pattern), and thus, at an opposite direction (i.e., at a side of antenna element 11) maximum gain is obtained (see Figs. 3A through 3D, which will be described later). It is to be noted that another delay method can be also used in the delay circuit 14.

The synthesizer 15 is a circuit for synthesizing signals received by the antenna elements 10 and 11.

Figs. 3A through 3D are diagrams for illustrating operation situations of the antenna 100. Fig. 3A illustrates a situation where the antenna element 10 is connected to the transmission line L1 as well as the antenna element 11 is connected to the transmission line L2. Fig. 3B illustrates a situation where the antenna element 10 is connected to the transmission line L2 as well as the antenna element 11 is connected to the transmission line L1.

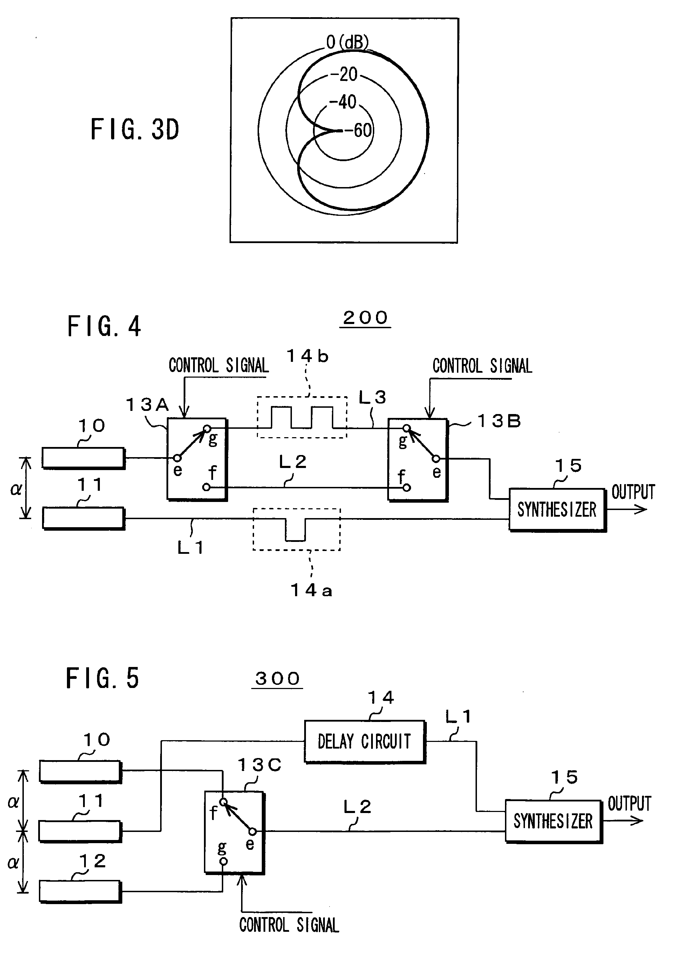

Fig. 3C is a diagram for illustrating directivity of the antenna 100 in the situation where the antenna element 10 is connected to the transmission line L1 as well as the antenna element 11 is connected to the transmission line L2. Fig. 3D is a diagram for illustrating directivity of the antenna 100 in the situationwhere the antenna element 10 is connected to the transmission line L2 as well as the antenna element 11 is connected to the transmission line L1.

As illustrated in Fig. 3A, according to switching operation of the changeover switch 13, a terminal, "a" of the changeover switch 13 is connected to a terminal, "c" thereof and a terminal, "b" thereof is connected to a terminal, "d" thereof, so that the antenna element 10 is connected to the transmission line L1 as well as the antenna element 11 is connected to the transmission line L2. In this case, waves existing along an extensionof line connecting the antenna elements 10 and 11 are cancelled out for each other at a side of antenna element 10 to generate a null point shown in Fig. 3C, and thus, at an opposite direction (i.e., at a side of antenna element 11) maximum gain is obtained. It is to be herein noted that a relative gain is shown with maximum gain being 0 dB.

As illustrated in Fig. 3B, according to switching operation of the changeover switch 13, a terminal, "a" of the changeover switch 13 is connected to a terminal, "d" thereof and a terminal, "b" thereof is connected to a terminal, "c" thereof, so that the antenna element 10 is connected to the transmission line L2 as well as the antenna element 11 is connected to the transmission line L1. In this case, waves existing along an extension of line connecting the antenna elements 10 and 11 are cancelled out for each other at a side of antenna element 11 to generate a null point shown in Fig. 3D, and thus, at an opposite direction (i.e., at a side of antenna element 10) maximum gain is obtained. It is to be herein noted that a relative gain is shown with maximum gain being 0 dB.

As described above, it is possible to switch the directivity of the antenna 100 composed of two non-directivity antenna elements 10 and 11 that are positioned at smaller distance apart than a half wavelength and the like by means of change in the above two situations by the changeover switch 13. It is thus possible to perform a control such that the maximum radiation pattern faces a desired wave and the null point faces a non-desired wave by controlling received outputs in the antenna elements 10 and 11.

Thus, according to this embodiment, the antenna 100 has the antenna elements 10 and 11 that are positioned at smaller distance (α=12.5 mm) apart than a half wavelength of a frequency of a signal to be received, the transmission line L1 and the transmission line L2 including the delay circuit 14 having a predetermined electric length, and the changeover switch 13 in which when receiving the signal, the changeover switch 13 switches the antenna elements 10 and 11 so that the best reception situation can be realized based on the control signal, to make the directivity of the antenna 100 changed.

This allows such the antenna to be easily mounted on or built in any small sized wireless communication signal-receiving apparatus and the diversity reception to be effectively done, thereby improving a sensitivity of the antenna and implementing the small size, the low power consumption, and the low price thereof.

Two antenna elements 10, 11 and the transmission lines L1, L2 can be switched simultaneously using one DPDT type changeover switch 13, and this allows antenna circuit to be easily realized.

The followingwill describe a second embodiment of this invention.

FIG. 4 illustrates a configuration of a second embodiment of an antenna 200 relative to this invention. This antenna 200 switches the transmission lines for transmitting signals received at the antenna elements using two changeover switches. In this Fig. 4, like reference numbers are like members corresponding to those shown in Fig. 2, a detailed description of which will be omitted.

As shown in Fig. 4, the antenna 200 is composed of antenna elements 10 and 11, changeover switches 13A and 13B as switching means, delay circuits 14a and 14b, a synthesizer 15 as synthesizing means, and transmission lines L1, L2, and L3. In this case, the antenna elements 10 and 11 are arranged so that they are positioned at smaller distance, for example, 12. 5 mm (one tenth wavelength) apart than a half wavelength of a frequency, 2.4 GHz, of a signal to be received.

The changeover switches 13A and 13B are switches of single pole double throw (SPDT) type, each of which has one input terminal and two output terminals. Such the changeover operations of changeover switches 13A and 13B are controlled based on the received control signals. Property of each of the changeover switches 13A and 13B is as follows: for example, control voltages; 0/+3V, and insertion loss; 0.5dB typical (at frequencies of 2.0 to 3.0 GHz).

For example, the delay circuits 14a and 14b are made of conductor having a predetermined electric length. The delay circuit 14a is provided in the transmission line L1. The delay circuit 14b is also provided in the transmission line L3. It is estimated that a distance between the antenna elements 10 and 11 is α and a difference between electric lengths of the transmission lines L1 andL2 (or the transmission lines L1 and L3), which are respectively connected to the antenna elements 10 and 11, is β. The delay circuits 14a and 14b are set so that α+β can become a half wavelength of a frequency of a signal to be received. Namely, a difference of an electric length of a path that passes from the antenna element 10 through the transmission line L3 toward the synthesizer 15 from an electric length of a path that passes from the antenna element 11 through the transmission line L1 toward the synthesizer 15 is set so as to become (λ/2-α) and further, a difference of an electric length of a path that passes from the antenna element 10 through the transmission line L2 toward the synthesizer 15 from an electric length of a path that passes from the antenna element 11 through the transmission line L1 toward the synthesizer 15 is set so as to become (-λ/2+α).

When receiving a signal, according to switching operations of the changeover switch 13A, a terminal, "e" of the changeover switch 13A is connected to a terminal, "f" thereof and simultaneously, according to switching operations of the changeover switch 13B, a terminal, "e" of the changeover switch 13B is connected to a terminal, "f" thereof, so that the antenna element 10 is connected to the transmission line L2. In this case, a null point occurs along an extension of line connecting the antenna elements 10 and 11 at a side of antenna element 10, and thus, at an opposite direction (i.e., at a side of antenna element 11) maximum gain is obtained (see Fig. 3C).

Further, according to switching operations of the changeover switch 13A, the terminal, "e" of the changeover switch 13A is connected to a terminal, "g" thereof and simultaneously, according to switching operations of the changeover switch 13B, a terminal, "e" of the changeover switch 13B is connected to a terminal, "g" thereof, so that the antenna element 10 is connected to the transmission line L3. In this case, a null point occurs along an extension of line connecting the antenna elements 10 and 11 at a side of antenna element 11, and thus, at an opposite direction (i.e., at a side of antenna element 10) maximum gain is obtained (see Fig. 3D).

As described above, it is possible to change the directivity of the antenna 100 composed of two non-directivity antenna elements 10 and 11 that are positioned at smaller distance apart than a half wavelength and the like by means of change in the above two situations by the changeover switches 13A and 13B.

Thus, according to this embodiment, the antenna 200 has the antenna elements 10 and 11 that are positioned at smaller distance (α=12.5 mm) apart than a half wavelength of a frequency of a signal to be received, the transmission line L2 and the transmission lines L1 and L3 respectively including the delay circuits 14a and 14b each having a predetermined electric length, and the changeover switches 13A and 13b in which when receiving a signal, the changeover switches 13A and 13B switch the transmission lines L2 and L3 so that the best reception situation can be realized based on the control signals, to make the directivity of the antenna 200 changed.

This allows such the antenna to be easily mounted on or built in any small sized wireless communication signal-receiving apparatus and the diversity reception to be effectively done, thereby improving a sensitivity of the antenna and implementing the small size, the low power consumption, and the low price thereof.

The transmission lines L2, L3 are switched using the general-purpose changeover switches13A and 13B of SPDT type, which allows versatility of parts to be increased.

The following will describe a third embodiment of this invention.

FIG. 5 illustrates a configuration of the third embodiment of an antenna 300 relative to this invention. This antenna 300 uses three antenna elements. In this Fig. 5, like reference numbers are like members corresponding to those shown in Fig. 2, a detailed description of which will be omitted.

As shown in Fig. 5, the antenna 300 is composed of antenna elements 10, 11, and 12, a changeover switch 13C as switching means, a delay circuit 14, a synthesizer 15 as synthesizing means, and transmission lines L1 and L2. In this case, the antenna elements 10, 11 and 12 are arranged so that they are respectivelypositioned at smaller distance, for example, 12.5 mm (one tenth wavelength) apart than a half wavelength of a frequency, 2.4 GHz, of a signal to be received.

The changeover switch 13C is a switch of single pole double throw (SPDT) type, which has two input terminals and one output terminal. Such the changeover operations of changeover switch 13C are controlled basedon the received control signal. Property of the changeover switch 13C is as follows: for example, control voltages; 0/+3 V, and insertion loss; 0.5 dB typical (at frequencies of 2.0 to 3.0 GHz). A terminal, "e" of this changeover switch 13A is connected to the transmission line L2, a terminal, "f" thereof is connected to the antenna element 10, and a terminal, "g" thereof is connected to the antenna element 12.

The delay circuit 14 is provided in the transmission line L1. It is estimated that respective distances between the antenna elements 10, 11 and 12 are α and a difference between electric lengths of the transmission lines L2 and L1, which are respectively connected to the antenna elements 10 (or 12) and 11, is β. The delay circuit 14 is set so that α+β can become a half wavelength of a frequency of a signal to be received. Namely, a difference of an electric length of a path that passes from the antenna element 10 or 12 through the transmission line L2 toward the synthesizer 15 from an electric length of a path that passes from the antenna element 11 through the transmission line L1 toward the synthesizer 15 is set so as to become (λ/2-α) or (-λ/2+α). In this case, a difference of an electric length of a path that passes from the antenna element 10 through the transmission line L2 toward the synthesizer 15 from an electric length of a path that passes from the antenna element 12 through the transmission line L2 toward the synthesizer 15 is set so as to become zero.

When receiving a signal, according to switching operations of the changeover switch 13C, a terminal, "e" of the changeover switch 13C is connected to a terminal, "f" thereof, so that the antenna element 10 is connected to the transmission line L2. In this case, a null point occurs along an extension of line connecting the antenna elements 10 and 11 at a side of antenna element 10, and thus, at an opposite direction (i.e., at a side of antenna element 11) maximum gain is obtained (see also Fig. 3C).

Further, according to switching operations of the changeover switch 13C, the terminal, "e" of the changeover switch 13C is connected to a terminal, "g" thereof, so that the antenna element 12 is connected to the transmission line L2. In this case, a null point occurs along an extension of line connecting the antenna elements 11 and 12 at a side of antenna element 12, and thus, at an opposite direction (i.e., at a side of antenna element 11) maximum gain is obtained (see Fig. 3D).

As described above, it is possible to change the directivity of the antenna 300 composed of three non-directivity antenna elements 10, 11, and 12 in which each of them is positioned at smaller distance apart than a half wavelength and the like by means of change in the above two situations by the changeover switch 13C.

Thus, according to this embodiment, the antenna 300 has the antenna elements 10, 11 and 12 in which they are respectively positioned at smaller distance (α=12.5 mm) apart than a half wavelength of a frequency of a signal to be received, the transmission line L1 including the delay circuit 14 having a predetermined electric length and the transmission line L2, and the changeover switch 13C in which when receiving the signal, the changeover switch 13C switches the antenna elements 10 and 12 so that the best reception situation can be realized based on the control signal, to make the directivity of the antenna 300 changed.

This allows such the antenna to be easily mounted on or built in any small sized wireless communication signal-receiving apparatus and the diversity reception to be effectively done, thereby improving a sensitivity of the antenna and implementing the small size, the low power consumption, and the low price thereof.

The three antenna elements 10, 11, and 12 are switched using one changeover switch 13C of SPDT type, which allows versatility of parts to be increased and low loss to be realized. This also allows small size of the antenna circuit to be realized.

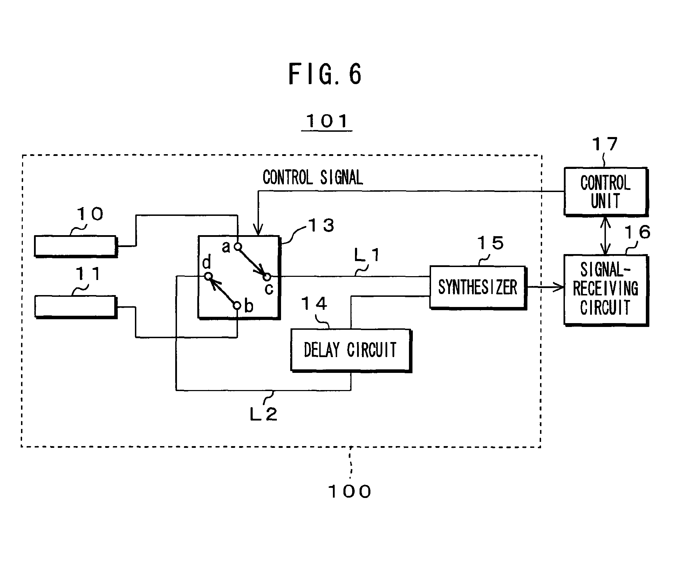

The following will describe an embodiment of signal-receiving apparatus according to the invention. Fig. 6 is a diagram for illustrating a configuration of the embodiment of signal-receiving apparatus 101. This signal-receiving apparatus 101 uses the above antenna 100 as a receiving antenna.

As shown in Fig. 6, the signal-receiving apparatus 101 is composed of the antenna 100, a signal-receiving circuit 16, and a control unit 17 as controlling means.

The antenna 100 is composed of the antenna elements 10 and 11, the changeover switch 13 as switching means, the delay circuit 14, the synthesizer 15 as synthesizing means, and the transmission lines L1 and L2, as described above.

In this antenna 100, the changeover switch 13 switches connection between the antenna elements 10, 11 and the transmission lines L1, L2 based on a control signal received from the control unit 17. This allows to be changed directivity of the antenna 100 which is comprised of two non-directive antenna elements 10, 11 that are positioned at a distance smaller than a half wavelength and the like.

The signal-receiving circuit 16 is a circuit for processing a signal that is received from the antenna 100.

The control unit 17 has, for example, a CPU, an ROM, and an RAM (which are not shown) as well known. The CPU controls the entire operation of the signal-receiving apparatus 101 with the RAM being used as working area according to information on a control program, which is stored in the ROM. The control unit 17 also controls switching operations of the changeover switch 13 as control means for controlling directivity of the antenna 100.

The signal-receiving apparatus 101 thus composed can perform an effective diversity reception because by the changeover switch 13, the directivity of the antenna 100 can be changed.

For example, when receiving a signal, the control unit 17 outputs a control signal. According to this control signal, it is controlled so that the changeover switch 13 switches the antenna elements 10 and 11 at a predetermined frequency. This allows the directivity of the antenna 100 to be changed to a right or left direction, for example. The received signal that the antenna 100 receives is supplied to the signal-receiving circuit 16. The signal-receiving circuit 16 detects the received signal and selects a connection terminal of the changeover switch 13 so that the best receiving situation can be given, thereby allowing the directivity of the antenna 100 to be automatically changed.

Thus, in this embodiment, the antenna 100, the signal-receiving circuit 16, and the control unit 17 are provided therein in which when receiving a signal, the control unit 17 controls the changeover switch 13 so that the best receiving situation can be given. This makes the directivity of the antenna 100 changed so that, because it is possible to effectively perform any diversity reception in even a small sized wireless signal-receiving apparatus, a sensitivity of antenna can be improved to implement the small size, the low power consumption, and the low price thereof.

Also, since the diversity reception can be realized in a small sized wireless signal-receiving apparatus, a large gain of antenna can be obtained and thus, it is possible to choose a desired signal from a noise based on a difference in receiving directions thereof and to receive the desired signal selectively.

It is to be noted that although a case where two or three antenna elements are used in the antenna has been described in the above embodiments, this invention is not limited thereto. This invention can be also applied to a case where more than three antenna elements are used.

It is also to be noted that although the antennas 100, 200, and 300 have been described as antennas each used for wireless signal-receiving apparatus in the above embodiments, this invention is not limited thereto. These antennas 100, 200, and 300 may be also used as antennas each used for wireless signal-transmitting apparatus.

According to this invention, a receiving antenna has a plurality of antenna elements positioned at smaller distance apart than a half wavelength of a frequency of a signal to be received, a plurality of transmission lines for transmitting the signal received in any of the antenna elements, at least any one of the transmission lines having a delay circuit with a predetermined electric length, synthesizing means for synthesizing the received signals that have been transmitted through the plurality of transmission lines, and switching means, which is positioned in the transmission line, for switching the antenna elements or the transmission lines, inwhich the switchingmeans switches the antenna elements or the transmission lines to set to two a number of antenna elements to be simultaneously output among the plurality of antenna elements and to switch a directivity of the antenna to the reverse direction thereof, thereby allowing a sensitivity of antenna to be improved and the small size, the low power consumption, and the low price thereof to be implemented because it is possible to effectively perform any diversity reception in even a small sized wireless signal-receiving apparatus.

Also, since the diversity reception can be realized in a small sized wireless signal-receiving apparatus, a large gain of antenna can be obtained and thus, it is possible to choose a desired signal from a noise based on a difference in receiving directions thereof and to receive the desired signal selectively.

### Industrial Applicability

Thus, an antenna and a signal-receiving apparatus using the same relative to the invention can be applied to a small sized wireless communication signal-receiving apparatus such as a handheld terminal and also applied to a PC card and/or a memory card, which have a signal-receiving function.

## Claims

1. An antenna for receiving wireless communication signal, said antenna comprising:
a plurality of antenna elements positioned at smaller distance apart than a half wavelength of a frequency of signal to be received;
a plurality of transmission lines for transmitting the signal received in any of the antenna elements, at least any one of the transmission lines having a delay circuit with a predetermined electric length;
synthesizing means for synthesizing the received signals that have been transmitted through the plurality of transmission lines; and
switching means, which is positioned in the transmission line, for switching the antenna elements or the transmission lines, in which the switching means switches the antenna elements or the transmission lines to set to two a number of antenna elements to be simultaneously output among the plurality of antenna elements and to change a directivity of the antenna to the reverse direction thereof.

2. The antenna according to claim 1, wherein the delay circuit is set so that a sum of phase difference corresponding to a distance between the two antenna elements outputting simultaneously and phase difference of electric length of the transmission lines connected to the two antenna elements can become 180 degrees at the frequency.

3. The antenna according to claim 1, wherein a distance between the antenna elements and the delay circuit are adjusted, so that the antenna can have null point in the directivity thereof in at least one direction.

4. A signal-receiving apparatus for receiving wireless communication signal, said apparatus comprising:
an antenna for receiving the wireless communication signal;
a signal-receiving circuit for processing a signal received from the antenna; and
control means for controlling directivity of the antenna, said antenna including:
a plurality of antenna elements positioned at smaller distance apart than a half wavelength of a frequency of signal to be received;
a plurality of transmission lines for transmitting the signal received in any of the antenna elements, at least any one of the transmission lines having a delay circuit with a predetermined electric length;
synthesizing means for synthesizing the received signals that have been transmitted through the plurality of transmission lines; and
switching means, which is positioned in the transmission line, for switching the antenna elements or the transmission lines, in which the switching means switches the antenna elements or the transmission lines to set to two a number of antenna elements to be simultaneously output among the plurality of antenna elements and to change a directivity of the antenna to the reverse direction thereof.

5. The signal-receiving apparatus according to Claim 4, wherein the delay circuit is set so that a sum of phase difference corresponding to a distancebetween the two antenna elements outputting simultaneously and phase difference of electric length of the transmission lines connected to the two antenna elements can become 180 degrees at the frequency.

6. The signal-receiving apparatus according to Claim 4, wherein a distance between the antenna elements and the delay circuit are adjusted, so that the antenna can have null point in the directivity thereof in at least one direction.

## Amended claims

### Amended claims under Art. 19.1 PCT

1. (Amended) An antenna for receiving wireless communication signal, said antenna comprising:
two antenna elements positioned at smaller distance apart than a half wavelength of a frequency of a signal to be received;
a first transmission line and a second transmission line having a delay circuit with a predetermined electric length;
synthesizing means for synthesizing the received signals that have been transmitted through the first and second transmission lines; and
switching means for switching respective connection between one and the other of two antenna elements and the first and second transmission lines, respectively, in which the switching means switches the connection to change directivity of the antenna to the reverse direction thereof.

2. (Amended) An antenna for receiving wireless communication signal, said antenna comprising:
a first antenna element and a second antenna element that are positioned at smaller distance apart than a half wavelength of a frequency of a signal to be received;
a first transmission line for transmitting a signal received at the first antenna element, said first transmission line having a first delay circuit with a first electric length;
a second transmission line for transmitting a signal received at the second antenna element;
a third transmission line for transmitting the signal received at the second antenna element, said third transmission line having a delay circuit with a second electric length;
first switching means for switching a connection to transmit the signal received at the second antenna element to any one of the second transmission line and the third transmission line;
second switching means for switching a connection to transmit the signal from any one of the second transmission line and the third transmission line; and
synthesizing means for synthesizing the signal transmitted from the first transmission line and the signal transmitted through the second switching means, in which the first and second switching means switch the connection to change directivity of the antenna to the reverse direction thereof.

3. (Amended) An antenna for receiving wireless communication signal, said antenna comprising:
a first antenna element;
a second antenna element positioned at smaller distance apart from the first antenna element than a half wavelength of a frequency of a signal to be received;
a third antenna element positioned on an opposite side of the second antenna element at smaller distance apart from the first antenna element than a half wavelength of a frequency of a signal to be received;
a first transmission line for transmitting a signal received at the first antenna element, said first transmission line having a delay circuit with a predetermined electric length;
a second transmission line;
switching means for switching a connection to transmit any one of a signal received by the second antenna element and a signal received by the third antenna element to the second transmission line; and
synthesizing means for synthesizing the signals transmitted from the first and second transmission lines, in which the switching means switches the connection to change directivity of the antenna to the reverse direction thereof.

4. (Amended) A signal-receiving apparatus for receiving a wireless communication signal, said apparatus comprising:
an antenna for receiving the wireless communication signal;
a signal-receiving circuit for processing a signal received from the antenna; and
control means for controlling directivity of the antenna, said antenna including:
two antenna elements positioned at smaller distance apart than a half wavelength of a frequency of a signal to be received;
a first transmission line and a second transmission line having a delay circuit with a predetermined electric length;
synthesizing means for synthesizing the received signals that have been transmitted through the first and second transmission lines; and
switching means for switching respective connection between one and the other of two antenna elements and the first and second transmission lines, respectively, in which the switching means switches the connection to change directivity of the antenna to the reverse direction thereof.

5. (Amended) A signal-receiving apparatus for receiving a wireless communication signal, said apparatus comprising:
an antenna for receiving the wireless communication signal;
a signal-receiving circuit for processing a signal received from the antenna; and
control means for controlling directivity of the antenna, said antenna including:
a first antenna element and a second antenna element that are positioned at smaller distance apart than a half wavelength of a frequency of a signal to be received;
a first transmission line for transmitting a signal received at the first antenna element, said first transmission line having a first delay circuit with a first electric length;
a second transmission line for transmitting a signal received at the second antenna element;
a third transmission line for transmitting the signal received at the second antenna element, said third transmission line having a delay circuit with a second electric length;
first switching means for switching a connection to transmit the signal received at the second antenna element to any one of the second transmission line and the third transmission line;
second switching means for switching a connection to transmit the signal from any one of the second transmission line and the third transmission line; and
synthesizing means for synthesizing the signal transmitted from the first transmission line and the signal transmitted through the second switching means, in which the first and second switching means switch the connection to change directivity of the antenna to the reverse direction thereof.

6. (Amended) A signal-receiving apparatus for receiving a wireless communication signal, said apparatus comprising:
an antenna for receiving the wireless communication signal;
a signal-receiving circuit for processing a signal received from the antenna; and
control means for controlling directivity of the antenna, said antenna including:
a first antenna element;
a second antenna element positioned at smaller distance apart from the first antenna element than a half wavelength of a frequency of a signal to be received;
a third antenna element positioned on an opposite side of the second antenna element at smaller distance apart from the first antenna element than a half wavelength of a frequency of a signal to be received;
a first transmission line for transmitting a signal received at the first antenna element, said first transmission line having a first delay circuit with a predetermined electric length;
a second transmission line;
switching means for switching a connection to transmit any one of a signal received by the second antenna element and a signal received by the third antenna element to the second transmission line; and
synthesizing means for synthesizing the signals transmitted from the first and second transmission lines, in which the switching means switches the connection to change directivity of the antenna to the reverse direction thereof.
